# EUROPÄISCHE PATENTSCHRIFT

(11) **EP 3 830 921 B1**
(45) Veröffentlichungstag und Bekanntmachung des Hinweises auf die Patenterteilung: **09.07.2025**
(21) Anmeldenummer: 18785865.9
(22) Anmeldetag: 27.09.2018
(51) Int. Cl.: H02H 7/04, H02H 9/04

(54) **STERNPUNKTERDUNG MIT ÜBERSPANNUNGSBEGRENZUNG FÜR EINEN MEHRPHASIGEN TRANSFORMATOR**
STAR POINT EARTHING WITH OVERVOLTAGE LIMITING FOR A POLYPHASE TRANSFORMER
MISE À LA TERRE DU POINT NEUTRE AVEC LIMITATION DES SURTENSIONS POUR UN TRANSFORMATEUR POLYPHASÉ

(43) Veröffentlichungstag der Anmeldung: 09.06.2021
(73) Patentinhaber: Siemens Energy Global GmbH & Co. KG, 81739 München (DE)
(72) Erfinder: PRIEBE, Torsten, 91096 Möhrendorf (DE); SCHUSTER, Roland, 91056 Erlangen (DE); SCHACHERER, Christian, 92364 Deining (DE)
(86) Internationale Anmeldenummer: PCT/EP2018/076320
(87) Internationale Veröffentlichungsnummer: WO 2020/064112

(56) Entgegenhaltungen:
- EP-A1- 0 860 927
- WO-A1-2016/055106
- CN-A- 104 319 733
- CN-U- 202 474 853
- CN-Y- 2 907 023
- ABB: "Überspannungsschutz: Metalloxidableiter in Mittelspannungsnetzen", ANWENDUNGSRICHTLINIEN, 31 May 2011 (2011-05-31), XP055596785, Retrieved from the Internet <URL:https://library.e.abb.com/public/b1629ec8aa7bb206c12578d20032e540/985_abb_awr_mittelspannung_D_low.pdf> [retrieved on 20190614]
- ELEKTROTECHNISCHE GESELLSCHAFT: "STERNPUNKT STE 2017 - Mehr als nur Sternpunktbehandlung", ETG MITGLIEDERINFORMATION 02/2017, 31 December 2017 (2017-12-31), XP055596784, Retrieved from the Internet <URL:https://www.vde.com/resource/blob/1642414/cf7d63fbf42e0f2fabaa838c49b52dcb/etg-mi-2017-2-download-data.pdf> [retrieved on 20190614]
- AUTHORS - UNDISCLOSED: "Betriebserdung", BETRIEBSERDUNG, 25 September 2018 (2018-09-25), Internet, XP055598902, Retrieved from the Internet <URL:https://de.wikipedia.org/w/index.php?title=Betriebserdung&action=history> [retrieved on 20190624]

## Beschreibung

Die Erfindung betrifft eine Anordnung mit einem mehrphasigen Transformator, der Primärwicklungen und Sekundärwicklungen aufweist, wobei die Sekundärwicklungen in einer Sternschaltung geschaltet sind. Weiterhin betrifft die Erfindung ein Verfahren zum Schützen einer elektrischen Anlage vor Überspannung.

Eine Anordnung der oben beschriebenen Art ist in vielen elektrischen Anlagen zu finden, insbesondere auch in Hochspannungsanlagen. Dabei sind häufig die Primärwicklungen des Transformators mit einem Wechselspannungsnetz verbindbar, welches die Anordnung und damit die gesamte Anlage mit elektrischer Energie versorgt oder welches von der Anordnung mit Energie versorgt wird. An die Sekundärwicklungen des Transformators ist in der Regel eine elektrische Einrichtung angeschlossen, beispielsweise ein Stromrichter.

Beim Betrieb der Anordnung bzw. der Anlage können Fehler auftreten, bei denen das elektrische Potential des Sternpunktes der Sekundärwicklungen unerwünscht große Werte annimmt. Dann nehmen auch die Sekundärspannungen des Transformators unerwünscht hohe Werte an, was zu einer Beschädigung des Transformators, aber auch insbesondere zu einer Beschädigung der an die Sekundärwicklungen des Transformators angeschlossenen elektrischen Einrichtung führen kann.

Aus den Schriften CN 104 319 733 A und CN 202 474 853 U ist ein Transformator bekannt, bei dem ein Sternpunkt mittels eines Überspannungsableiters mit Erdpotential verbunden ist. Der Überspannungsableiter ist mit einem Schalter überbrückbar.

Die Schrift CN 2 907 023 Y offenbart eine ähnliche Überspannungsbegrenzungseinrichtung, bei der eine Funkenstrecke verwendet wird.

Die europäische Patentanmeldung EP 0 860 927 A1 offenbart eine Schutzschaltungsanordnung, bei der ein Neutralleiter eines elektrischen Netzes mittels einer Überspannungsbegrenzungseinrichtung mit Erdpotential verbunden ist. Die Überspannungsbegrenzungseinrichtung weist einen Überspannungsableiter mit einem parallelgeschalteten Schalter auf.

Der Erfindung liegt die Aufgabe zugrunde, eine Anordnung und ein Verfahren anzugeben, mit denen im Fehlerfall auftretende elektrische Potentiale an den Sekundärwicklungen des Transformators begrenzt werden können.

Diese Aufgabe wird erfindungsgemäß gelöst durch eine Anordnung und durch ein Verfahren nach den unabhängigen Patentansprüchen. Vorteilhafte Ausgestaltungen der Anordnung und des Verfahrens sind in den abhängigen Patentansprüchen angegeben.

Offenbart wird eine Anordnung mit einem mehrphasigen Transformator, der Primärwicklungen und Sekundärwicklungen aufweist, wobei
- die Sekundärwicklungen in einer Sternschaltung geschaltet sind, deren Sternpunkt mittels einer Überspannungsbegrenzungseinrichtung mit Erdpotential verbunden ist,
- die Überspannungsbegrenzungseinrichtung ein erstes überspannungsbegrenzendes Bauelement aufweist, und
- dem ersten überspannungsbegrenzenden Bauelement ein Schalter zugeordnet ist, der in seinem geschlossenen Zustand das erste überspannungsbegrenzende Bauelement elektrisch überbrückt.

Dabei kann die Anordnung eine elektrische Anlage oder Teil einer elektrischen Anlage sein, insbesondere einer elektrischen Hochspannungsanlage. Bei dieser Anordnung ist besonders vorteilhaft, dass im Fehlerfall der Schalter geschlossen werden kann, und damit das überspannungsbegrenzende elektrische Bauelement überbrückt werden kann. Der Schalter wirkt in diesem Falle als ein Bypass, welcher das Erdpotential zu dem (dem Erdpotential abgewandten) Anschluss des ersten überspannungsbegrenzenden Bauelements hin verlagert. Dadurch wird das elektrische Potential des Sternpunktes näher an das Erdpotential heran verlagert; das elektrische Potential des Sternpunktes kann sogar auf Erdpotential gelegt werden. Dadurch werden im Fehlerfall die Sekundärspannungen des Transformators verringert (insbesondere werden die Maximalwerte der Sekundärspannungen des Transformators begrenzt). Dadurch werden überspannungsbedingte Schäden am Transformator und/oder an der an den Transformator angeschlossenen elektrischen Einrichtung vermieden. Der Transformator und die angeschlossene Einrichtung können für geringere Maximalwerte der Spannung ausgelegt werden, was Aufwand und Kosten spart. Der Schalter kann auch als ein Kurzschließer bezeichnet werden, weil er dazu dient, das erste überspannungsbegrenzende Bauelement bei Bedarf kurzzuschließen. Alternativ könnte man den Schalter auch als (insbesondere schnellen) Erder bezeichnen.

Die Anordnung kann so ausgestaltet sein, dass der Schalter parallel zu dem ersten überspannungsbegrenzenden Bauelement geschaltet ist. Dadurch kann mittels des Schalters das erste überspannungsbegrenzende Bauelement überbrückt werden.

Gemäß der Erfindung weist die Überspannungsbegrenzungseinrichtung ein zweites überspannungsbegrenzendes Bauelement auf, das elektrisch in Reihe zu dem ersten überspannungsbegrenzenden Bauelement geschaltet ist. Das zweite überspannungsbegrenzende Bauelement ist dadurch vorteilhafterweise ein überspannungsbegrenzendes Bauelement, welches auch im Fehlerfall nicht von dem elektrischen Schalter überbrückt wird. Dadurch bleibt dieses zweite überspannungsbegrenzende Bauelement auch im Fehlerfall wirksam, was die Gestaltungsmöglichkeiten bei der Auslegung der Anordnung deutlich vergrößert.

Die Anordnung kann so ausgestaltet sein, dass das zweite überspannungsbegrenzende Bauelement schalterfrei ist. Unter einem schalterfreien Bauelement wird hier ein Bauelement verstanden, dem kein Schalter zugeordnet ist. Mit anderen Worten gesagt, wird das schalterfreie zweite überspannungsbegrenzende Bauelement (auch im Fehlerfall) nicht von einem elektrischen Schalter überbrückt. Dieses schalterfreie zweite überspannungsbegrenzende Bauelement ist also unabhängig von dem Zustand des Schalters stets in der Anordnung elektrisch wirksam. Das zweite überspannungsbegrenzende Bauelement kann also als ein schalterfreies Bauelement bezeichnet werden.

Die Anordnung kann auch so ausgestaltet sein, dass das erste überspannungsbegrenzende Bauelement und/oder das zweite überspannungsbegrenzende Bauelement ein Überspannungsableiter ist. Mittels des Überspannungsableiters bzw. der Überspannungsableiter kann vorteilhafterweise ein zusätzlicher Überspannungsschutz realisiert werden, welcher unabhängig von dem Schalter wirksam ist. Selbst bei einem Ausfall des Schalters (zum Beispiel, wenn der Schalter auch im Fehlerfall nicht geschlossen werden kann) sind das überspannungsbegrenzende Bauelement beziehungsweise die überspannungsbegrenzenden Bauelemente in der Anordnung wirksam und verhindern, dass der Sternpunkt der Sekundärwicklungen einen vorgewählten Maximalwert überschreitet. Dieser Maximalwert wird durch die Kennwerte der Überspannungsableiter bestimmt.

Die Anordnung kann so ausgestaltet sein, dass der Schalter ein mechanischer Schalter ist. Dieser mechanische Schalter kann insbesondere eine Vakuumschaltröhre aufweisen. Ein mechanischer Schalter kann kostengünstig realisiert werden. Es sind auch mechanische Schalter am Markt verfügbar, welche sehr schnell schließen. Damit kann ein schneller Schutz der Anordnung vor Überspannung realisiert werden.

Die Anordnung kann auch so ausgestaltet sein, dass der Schalter ein leistungselektronischer Schalter, insbesondere ein leistungselektronischer Schalter mit antiparallel geschalteten Thyristoren, ist. Mittels des leistungselektronischen Schalters, insbesondere eines leistungselektronischen Schalters auf Thyristorbasis, können besonders schnelle Schließzeiten des Schalters realisiert werden.

Die Anordnung kann auch so ausgestaltet sein, dass der Schalter eine (zündbare) Gasisolationsstrecke aufweist. Solche Gasisolationsstrecken werden auch als Gasfunkenstreckenbezeichnet. Diese Gasisolationsstrecken können gezündet werden, d.h. in einen leitfähigen Zustand versetzt werden. Als isolierendes Gas kann dabei beispielsweise SF6 oder vergleichbare, umweltfreundlichere Ersatzgase verwendet werden.

Die Anordnung kann so ausgestaltet sein, dass der Schalter mit einer Auslösevorrichtung verbunden ist, wobei die Auslösevorrichtung derart ausgestaltet ist, dass sie bei Auftreten eines Fehlers auf der Sekundärseite des Transformators, insbesondere bei Auftreten eines Fehlers bei einem an die Sekundärseite des Transformators angeschlossenen Stromrichter, den Schalter schließt. Dadurch wird die Anordnung und insbesondere auch der Stromrichter im Fehlerfall vor Überspannung geschützt; die Überspannung wird zumindest begrenzt. Dabei kann der Fehler insbesondere ein Erdschluss an einer Phasenleitung sein, die mit einer der Sekundärwicklungen des Transformators verbunden ist.

Die Anordnung kann auch so ausgestaltet sein, dass der Transformator für eine Sekundärspannung >= 36 kV ausgestaltet ist. Mit anderen Worten gesagt kann der Transformator (insbesondere hinsichtlich der elektrischen Isolationseigenschaften) so ausgestaltet sein, dass der Transformator mit einer Sekundärspannung >= 36 kV betreibbar ist. Besonders vorteilhaft ist der beschriebene Schalter, wenn der Transformator eine Sekundärspannung >= 36 kV hat, wenn es sich also um einen Hochspannungstransformator bzw. um eine Hochspannungsanordnung handelt. In diesem Fall lassen sich mittels des Schalters vergleichsweise einfach und zuverlässig die Elemente der Hochspannungsanordnung beziehungsweise der Hochspannungsanlage auch im Fehlerfall vor Überspannung schützen.

Offenbart wird weiterhin ein Verfahren zum Schützen einer elektrischen Anlage vor Überspannung, wobei
- die elektrische Anlage einen mehrphasigen Transformator mit Primärwicklungen und Sekundärwicklungen aufweist,
- die Sekundärwicklungen in einer Sternschaltung geschaltet sind, deren Sternpunkt mittels einer Überspannungsbegrenzungseinrichtung mit Erdpotential verbunden ist,
- die Überspannungsbegrenzungseinrichtung ein erstes überspannungsbegrenzendes Bauelement aufweist, und
- dem ersten überspannungsbegrenzenden Bauelement ein Schalter zugeordnet ist, der in seinem geschlossenen Zustand das erste überspannungsbegrenzende Bauelement elektrisch überbrückt, wobei bei dem Verfahren
- bei Auftreten eines Fehlers auf der Sekundärseite des Transformators, insbesondere bei Auftreten eines Fehlers bei einem an die Sekundärseite des Transformators angeschlossenen Stromrichter, der Schalter geschlossen wird.

Dadurch wird eine fehlerbedingte Vergrößerung der Spannung des Sternpunktes begrenzt.

Das Verfahren kann auch so ablaufen, dass der Fehler ein Erdschluss an einer Phasenleitung ist, die mit einer der Sekundärwicklungen des Transformators verbunden ist.

Die Anordnung und das Verfahren weisen gleiche beziehungsweise gleichartige Vorteile auf.

Im Folgenden wird die Erfindung anhand von Ausführungsbeispielen näher erläutert. Gleiche Bezugszeichen verweisen dabei auf gleiche oder gleichwirkende Elemente.

Dazu ist in
- Figur 1: eine Anordnung mit einem mehrphasigen Transformator und einem ersten überspannungsbegrenzenden Bauelement nach dem Stand der Technik dargestellt in
- Figur 2: ein Ausführungsbeispiel einer Anordnung mit einem ersten und einem zweiten überspannungsbegrenzenden Bauelement, in
- Figur 3: ein Ausführungsbeispiel einer Anordnung mit einem Thyristorschalter, in
- Figur 4: ein Ausführungsbeispiel eines Stromrichters in Form eines modularen Multilevelstromrichters, in
- Figur 5: ein Ausführungsbeispiel eines Moduls des modularen Multilevelstromrichters, und in
- Figur 6: ein weiteres Ausführungsbeispiel eines Moduls des modularen Multilevelstromrichters
dargestellt.

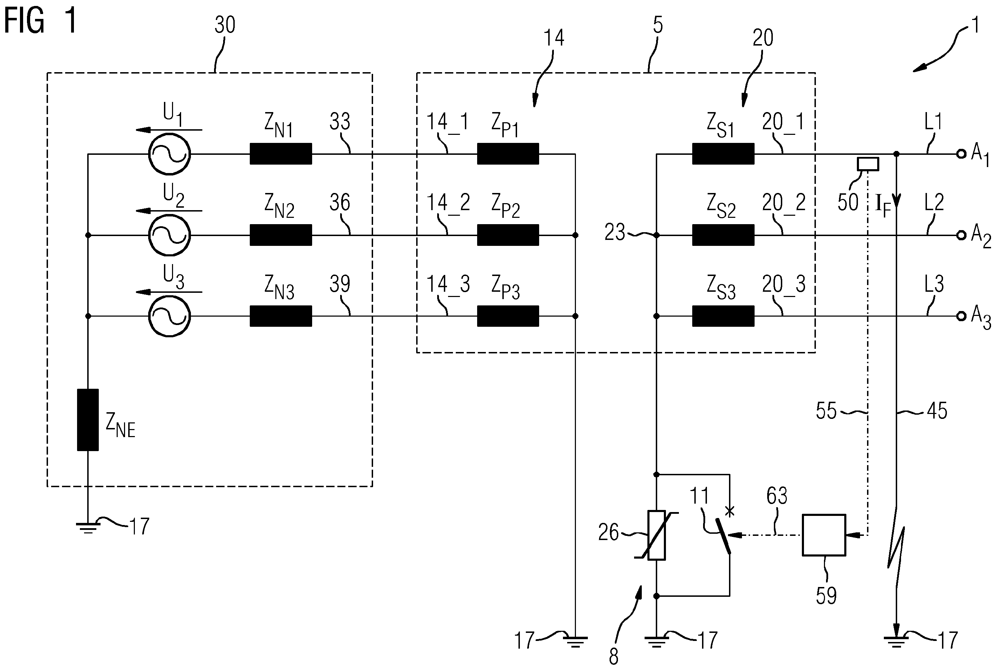

In Figur 1 ist eine Anordnung 1 mit einem mehrphasigen Transformator 5, einer Überspannungsbegrenzungseinrichtung 8 und einem Schalter 11 dargestellt. Der Transformator 5 weist eine erste Primärwicklung 14_1, eine zweite Primärwicklung 14_2 sowie eine dritte Primärwicklung 14_3 auf. Die drei Primärwicklungen 14_1, 14_2 und 14_3 sind modellhaft als eine erste Primärwicklungsimpedanz Z_{P1}, eine zweite Primärwicklungsimpedanz Z_{P2} bzw. eine dritte Primärwicklungsimpedanz Z_{P3} dargestellt. Die drei Primärwicklungen 14_1, 14_2 und 14_3 sind in Sternschaltung geschaltet; der Sternpunkt der Sternschaltung ist mit Erdpotential 17 verbunden.

Weiterhin weist der Transformator 5 eine erste Sekundärwicklung 20_1, eine zweite Sekundärwicklung 20_2 und eine dritte Sekundärwicklung 20_3 auf. Diese drei Sekundärwicklungen 20_1, 20_2 und 20_3 sind durch ihre jeweiligen Sekundärwicklungsimpedanzen Z_{S1}, Z_{S2} bzw. Z_{S3} modellhaft dargestellt. Die drei Sekundärwicklungen 20 sind in einer Sternschaltung geschaltet, der Sternpunkt 23 dieser Sternschaltung ist über die Überspannungsbegrenzungseinrichtung 8 mit Erdpotential 17 verbunden. Die Sternschaltung kann auch durch einen zusätzlichen Sternpunktbildner außerhalb des Transformators 5 realisiert sein.

In der Figur 1 weist die Überspannungsbegrenzungseinrichtung 8 ein erstes überspannungsbegrenzendes Bauelement 26 auf. Dieses erste überspannungsbegrenzende Bauelement 26 ist als ein erster Überspannungsableiter 26 ausgestaltet. Der Schalter 11 ist zu dem ersten überspannungsbegrenzenden Bauelement 26 parallelgeschaltet. Der Schalter 11 überbrückt in seinem geschlossenen Zustand die Überspannungsbegrenzungseinrichtung 8. Genauer gesagt überbrückt der Schalter 11 in seinem geschlossenen Zustand das erste überspannungsbegrenzende Bauelement 26 der Überspannungsbegrenzungseinrichtung 8. Bei geschlossenem ersten Schalter 11 ist also das erste überspannungsbegrenzende Bauelement 26 und damit die Überspannungsbegrenzungseinrichtung 8 überbrückt (kurzgeschlossen), so dass der Sternpunkt 23 unmittelbar mit Erdpotential 17 verbunden ist. Bei geöffnetem Schalter 11 ist die Überspannungsbegrenzungseinrichtung 8 elektrisch wirksam, so dass sich (bei Betrieb der Anordnung) am Sternpunkt 23 ein elektrisches Potential einstellt, welches sich vom Erdpotential 17 unterscheiden kann.

Die Primärwicklungen 14 des Transformators 5 sind mit einem mehrphasigen Wechselspannungsnetz 30 verbindbar. Das Wechselspannungsnetz 30 weist drei Phasen auf, welche jeweils durch eine ideale Wechselspannungsquelle U und eine Netzimpedanz Z_{N} (Netzphasenimpedanz Z_{N}) modellhaft dargestellt sind. So weist beispielsweise eine erste Phase 33 des dreiphasigen Wechselspannungsnetzes 30 eine erste ideale Spannungsquelle U₁ sowie eine erste Netzimpedanz Z_{N}, auf. Eine zweite Phase 36 und eine dritte Phase 39 des Wechselspannungsnetzes 30 sind gleichartig aufgebaut. Die drei Phasen 33, 36 und 39 des Wechselspannungsnetzes 30 sind in einer Sternschaltung geschaltet. Der Sternpunkt der Sternschaltung ist mit Erdpotential 17 verbunden, wobei die Erdimpedanz modellhaft als Bauelement Z_{NE} dargestellt ist.

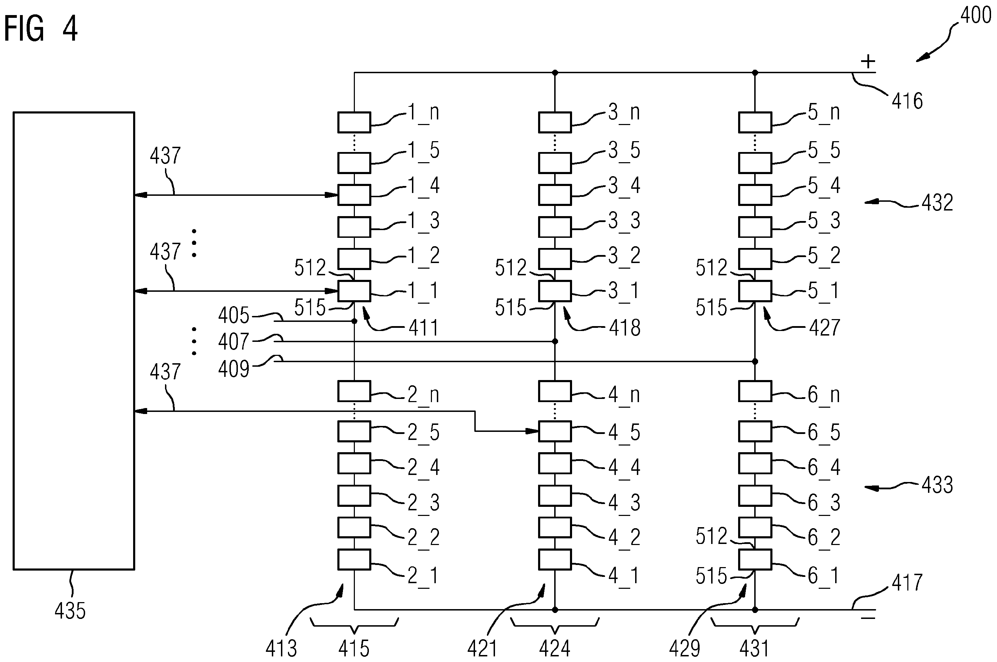

Die erste Sekundärwicklung 20_1 ist mit einem ersten Anschluss A₁ elektrisch verbunden. Dabei ist das dem Sternpunkt 23 gegenüberliegende Ende der ersten Sekundärwicklung 20_1 über eine erste Phasenleitung L₁ mit dem ersten Anschluss A₁ verbunden. In gleicher Weise ist die zweite Sekundärwicklung 20_2 mittels einer zweiten Phasenleitung L₂ mit einem zweiten Anschluss A₂ verbunden. Die dritte Sekundärwicklung 20_3 ist über eine dritte Phasenleitung L₃ mit einem dritten Anschluss A₃ verbunden. An die Anschlüsse A₁ bis A₃ können eine oder mehrere weitere elektrische Einrichtungen (einer Anlage) angeschlossen sein, beispielsweise ein Stromrichter. Im Ausführungsbeispiel ist an die Anschlüsse A₁ bis A₃ ein Multilevelstromrichter angeschlossen, wie er im Zusammenhang mit den Figuren 4 bis 6 detailliert beschrieben ist. In anderen Ausführungsbeispielen können jedoch an die Anschlüsse A₁ bis A₃ auch andere elektrische Einrichtungen angeschlossen sein, beispielsweise andere Arten von Stromrichtern.

Optional ist zwischen dem Wechselspannungsnetz 30 und dem Transformator 5 ein dreiphasiger Wechselspannungs-Leistungsschalter angeordnet (in den Figuren nicht dargestellt). Im Normalbetrieb der Anordnung 1 ist der Wechselspannungs-Leistungsschalter geschlossen (eingeschaltet), damit ist der Transformator 5 elektrisch mit dem Wechselspannungsnetz 30 verbunden. Die Sekundärwicklungen 20 versorgen dann den an die Anschlüsse A₁ bis A₃ angeschlossenen Multilevelstromrichter mit elektrischer Energie. Der Multilevelstromrichter kann die durch die Sekundärwicklungen 20 bereitgestellte Wechselspannung beispielsweise gleichrichten und an seinem Ausgang eine Gleichspannung bzw. einen Gleichstrom bereitstellen. In umgekehrter Energierichtung kann der Multilevelstromrichter, gespeist aus einer Gleichspannung, eine Wechselspannung bzw. einen Wechselstrom bereitstellen.

Eine derartige Konfiguration wird beispielsweise bei der Hochspannungs-Gleichstrom-Übertragung verwendet. Der Multilevelstromrichter kann aber auch lediglich Wechselspannungsanschlüsse aufweisen, welche mit den Anschlüssen A₁ bis A₃ verbunden sind. In diesem Fall kann der Multilevelstromrichter beispielsweise als ein Blindleistungskompensator oder ähnliches arbeiten, insbesondere in sogenannten FACTS-Anlagen. Bei Normalbetrieb ist der Schalter 11 geöffnet, so dass die Überspannungsbegrenzungseinrichtung 8 elektrisch wirksam ist. Da im Normalbetrieb an dem Sternpunkt 23 keine Überspannung anliegt, ist die Überspannungsbegrenzungseinrichtung 8 (hier: der erste Überspannungsableiter 26) hochohmig, so dass die Überspannungsbegrenzungseinrichtung 8 das elektrische Potential des Sternpunktes 23 nicht nennenswert beeinflusst.

Nun sei angenommen, dass ein Fehler in der Anordnung 1 auftritt: an der ersten Phasenleitung L₁ tritt zwischen dem Transformator 5 und dem angeschlossenen Stromrichter ein Erdschluss 45 auf (einpoliger Erdschluss 45), wodurch ein Fehlerstrom I_{F} von der ersten Phasenleitung L₁ zum Erdpotential 17 zu fließen beginnt. (In einem anderen Beispiel kann der Fehler auch an einer anderen Stelle der ersten Phase sekundärseitig des Transformators 5 auftreten, beispielsweise an einer elektrischen Verbindung zwischen dem ersten Anschluss A₁ und dem Stromrichter oder im Inneren des Stromrichters. Natürlich kann der Fehler auch an einer anderen Phase auftreten.)

Bei einem solchen Fehler 45 würde man üblicherweise den an die Anschlüsse A₁ bis A₃ angeschlossenen Multilevelstromrichter abschalten (d.h. die elektronischen Schaltelemente der Module des Multilevelstromrichters in einen sperrenden Zustand versetzen). Weiterhin würde man den Wechselspannungs-Leistungsschalter zwischen dem Wechselspannungsnetz 30 und dem Transformator 5 öffnen. Da jedoch Wechselspannungs-Leistungsschalter üblicherweise relativ langsam öffnen (das heißt, sie benötigen beispielsweise 50 bis 100 Millisekunden, bis sie den Stromfluss tatsächlich unterbrechen), fließt für eine weitere nennenswerte Zeitspanne Energie vom Wechselspannungsnetz 30 über den Transformator 5 in den Stromrichter. Dadurch wird der Stromrichter durch das Wechselspannungsnetz 30 auf unerwünscht hohe Spannungen aufgeladen. Diese unerwünscht hohe wechselspannungsseitige Aufladung des Stromrichters kann durch eine eventuell auftretende Überspannung im Wechselspannungsnetz 30 (die aufgrund des Fehlers bzw. aufgrund eines durch den Fehler hervorgerufenen Lastabwurfs entsteht) noch verstärkt werden. Die in einem derartigen Fehlerfall maximal beim Stromrichter auftretende Spannung musste bisher beim Entwurf des Stromrichters berücksichtigt werden und führte dazu, dass beispielsweise der Multilevelstromrichter eine vergleichsweise große Anzahl von Modulen aufweisen musste, damit die einzelnen Module bei Überspannung nicht überlastet werden. Aufgrund der relativ großen Anzahl an benötigten Modulen traten erhebliche Kosten auf. Insbesondere diese Überdimensionierung des Stromrichters kann vermieden werden, wie im Folgenden erläutert wird.

In der Schaltungsanordnung der Figur 1 wird das Auftreten des Fehlers 45 erkannt, zum Beispiel mittels einer an der ersten Phasenleitung L₁ durchgeführten Strommessung. Eine derartige Strommessung kann beispielsweise mittels eines Messwandlers 50 erfolgen, der an der ersten Phasenleitung L₁ angeordnet ist. Vorzugsweise kann ein (schnell arbeitender) Zeroflux-Messwandler verwendet werden, wodurch die veränderten Stromverhältnisse an der ersten Phasenleitung L₁ sehr schnell erkannt werden können. Von dem Messwandler 50 werden Strommesswerte 55 zu einer Auslösevorrichtung 59 übertragen. Die Auslösevorrichtung 59 erkennt aufgrund der Strommesswerte 55, dass ein Fehler an der ersten Phasenleitung L₁ vorliegt und sendet daraufhin ein Auslösesignal 63 an den Schalter 11. Daraufhin schließt der Schalter 11 und überbrückt das erste überspannungsbegrenzende Bauelement 26. Das Schließen des Schalters 11 kann sehr schnell erfolgen, beispielsweise innerhalb von 10 Millisekunden. Innerhalb dieser kurzen Zeitspanne ist der Wechselspannungs-Leistungsschalter zwischen dem Wechselspannungsnetz 30 und dem Transformator 5 noch nicht (vollständig) geöffnet, so dass weiterhin Energie vom Wechselspannungsnetz 30 in den Transformator 5 fließt. Da jedoch durch das Schließen des Schalters 11 der Sternpunkt 23 unmittelbar mit Erdpotential 17 verbunden wird, ist das elektrische Potential des Sternpunktes 23 festgelegt und das Potential des Sternpunktes 23 kann nicht unerwünscht große Werte annehmen. Dadurch wird verhindert, dass die an die Anschlüsse A₁ bis A₃ angeschlossene Einrichtung (hier: der Multilevelstromrichter) aufgrund Überspannung beschädigt wird.

Die Überspannungsbegrenzungseinrichtung 8 dient zwar ebenfalls der Begrenzung von Überspannungen des Sternpunktes 23, jedoch reagieren derartige Überspannungsbegrenzungseinrichtungen 8 (insbesondere Überspannungsbegrenzungseinrichtungen mit Überspannungsableitern) üblicherweise erst bei einer sehr hohen Überspannung am Sternpunkt 23, welche weit oberhalb der normalen Betriebsspannung liegt. Damit können derartige Überspannungsbegrenzungseinrichtungen mit Überspannungsableitern nicht wirkungsvoll zur Reduzierung der genannten fehlerbedingten Überspannungen eingesetzt werden, welche für die Dimensionierung der elektrischen Einrichtung relevant ist. Mittels des Schalters 11 wird jedoch vorteilhafterweise die Überspannungsbegrenzungseinrichtung 8 (hier: der erste Überspannungsableiter 26) kurzgeschlossen, so dass der überspannungsbegrenzende Effekt schon viel früher eintreten kann, das heißt, viel früher als der Überspannungsableiter 26 reagieren würde. Dazu wird lediglich der schnell auslösende Schalter 11 inklusive einer schnell reagierenden Auslösevorrichtung 59 benötigt.

Bei Erkennen des Fehlers wird also mittels des Schalters 11 die fehlerbedingte Verlagerung der Sternpunktspannung am Sternpunkt 23 bezüglich Erdpotential reduziert oder zeitlich deutlich verkürzt. Dadurch werden Überspannungen an den Anschlüssen A₁ bis A₃ beziehungsweise an diese Anschlüsse angeschlossenen Einrichtungen wirkungsvoll reduziert bzw. zeitlich begrenzt. Mithilfe des schnellen Schalters 11 wurde also eine Lösung gefunden, mit der insbesondere bei angeschlossenen Multilevelstromrichtern die maximal auftretende Überspannung begrenzt wird, so dass eine kleinere Anzahl an Modulen ausreichend ist. Dies führt zu einer deutlichen Kosteneinsparung.

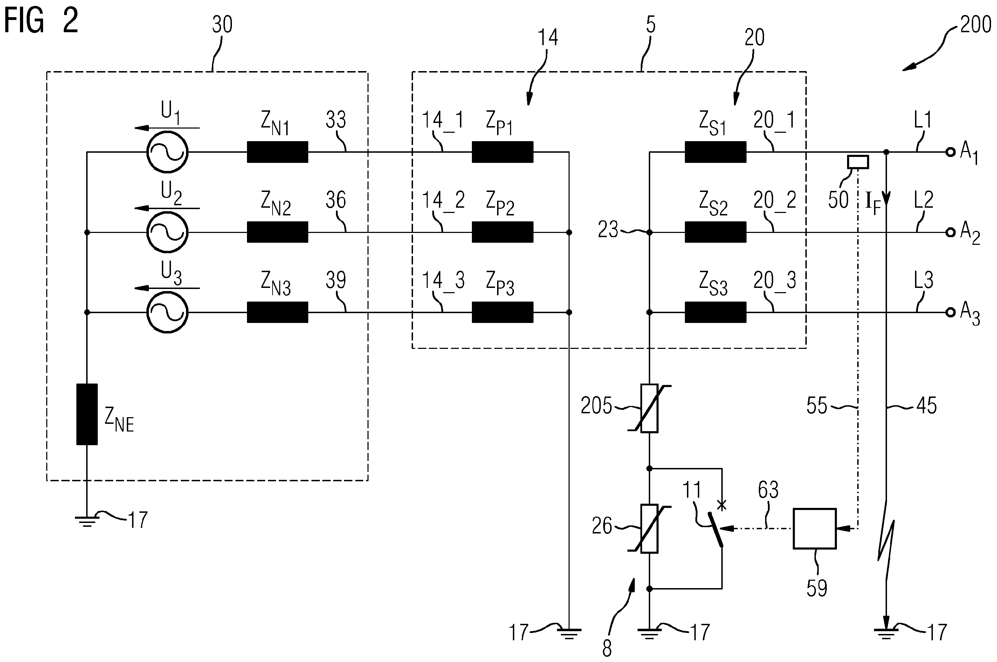

In Figur 2 ist ein Ausführungsbeispiel der Erfindung mit einer Anordnung 200 dargestellt. Diese Anordnung 200 unterscheidet sich von der Anordnung 1 der Figur 1 lediglich durch das erfindungsgemäße Merkmal, dass die Überspannungsbegrenzungseinrichtung 8 außer dem ersten überspannungsbegrenzenden Bauelement 26 noch ein zweites überspannungsbegrenzendes Bauelement 205 aufweist. Dieses zweite überspannungsbegrenzende Bauelement 205 ist als ein zweiter Überspannungsableiter 205 ausgestaltet. Das erste überspannungsbegrenzende Bauelement 26 und das zweite überspannungsbegrenzende Bauelement 205 sind elektrisch in Reihe geschaltet. Diese Reihenschaltung verbindet den Sternpunkt 23 mit Erdpotential 17.

Im Fehlerfall wird mittels des Schalters 11 (Kurzschließer 11) lediglich das erste überspannungsbegrenzende Bauelement 26 kurzgeschlossen (überbrückt), das zweite überspannungsbegrenzende Bauelement 205 ist von dem Schalter 11 unbeeinflusst. Der Schalter 11 schließt also im Fehlerfall nur einen Teil der Überspannungsbegrenzungseinrichtung 8 kurz. Dadurch bleibt das zweite überspannungsbegrenzende Bauelement 205 auch bei geschlossenem Schalter 11 elektrisch wirksam. Dies hat zur Folge, dass auch im Fehlerfall bei geschlossenem Schalter 11 das elektrische Potential des Sternpunktes 23 zwar verringert wird (das heißt, das Potential des Sternpunktes 23 wird in Richtung Erdpotential 17 verlagert); das elektrische Potential des Sternpunktes 23 wird aber nicht auf Erdpotential 17 gelegt. Vielmehr kann sich am Sternpunkt 23 ein elektrisches Potential einstellen, welches größer als Erdpotential ist. Dies kann vorteilhaft sein, um beispielsweise die im Fehlerfall auftretenden Strom- und Spannungsschwankungen zu begrenzen. Ansonsten laufen die Vorgänge bei der Anordnung 200 so ab, wie im Zusammenhang mit der Anordnung 1 gemäß Figur 1 beschrieben ist.

Das zweite überspannungsbegrenzende Bauelement 205 wird hier als ein schalterfreies spannungsbegrenzendes Bauelement 205 bezeichnet, weil diesem zweiten überspannungsbegrenzenden Bauelement 205 kein (Überbrückungs-)Schalter zugeordnet ist.

Bei den Schaltungsanordnungen der Figuren 1 und 2 ist der Schalter 11 als ein mechanischer Schalter ausgestaltet. Dieser mechanische Schalter kann beispielsweise eine Vakuumschaltröhre aufweisen. Diese Vakuumschaltröhre dient als Isolations- bzw. Schalteinrichtung. Diese Vakuumschaltröhre kann insbesondere mittels eines schnellen Antriebs sehr schnell geschlossen werden. Es ist beispielsweise denkbar, dass der Antrieb der Vakuumschaltröhre als ein axialer Linearantrieb ausgestaltet ist. In den Figuren 1 und 2 ist der Schalter 11 als ein Leistungsschalter dargestellt. Der Schalter 11 braucht jedoch kein Leistungsschalter zu sein; die Darstellung ist nur beispielhaft zu verstehen.

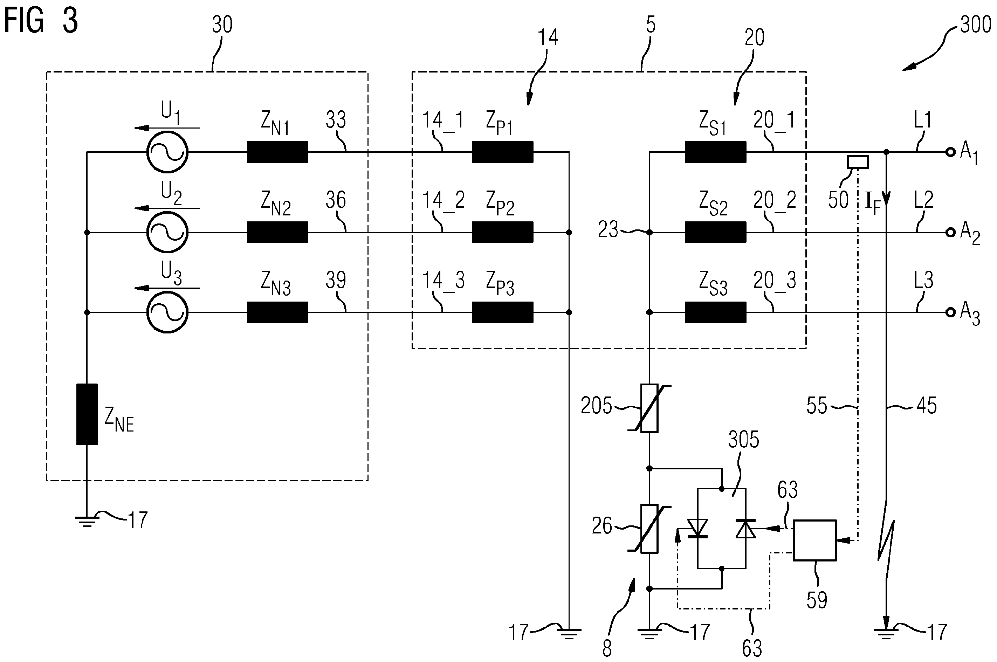

In Figur 3 ist ein weiteres Ausführungsbeispiel einer Anordnung 300 dargestellt. Diese Anordnung 300 unterscheidet sich von dem Ausführungsbeispiel der Figur 2 dadurch, dass der Schalter als ein leistungselektronischer Schalter 305 ausgestaltet ist. Der leistungselektronische Schalter 305 ist im Ausführungsbeispiel ein Thyristorschalter 305 (Thyristorkurzschließer 305). Dieser Schalter 305 weist antiparallel geschaltete Thyristoren auf, welche in ihrem eingeschalteten Zustand den Strom in beide Richtungen führen können. Dadurch kann mittels des leistungselektronischen Schalters 305 das erste überspannungsbegrenzende Bauelement 26 im Fehlerfall überbrückt werden. Ein derartiger leistungselektronischer Schalter 305 kann natürlich auch bei der Anordnung 1 gemäß Figur 1 eingesetzt werden.

Der Schalter 11 bzw. 305 kann auch anders ausgestaltet sein, beispielsweise als eine (zündbare, d.h. einschaltbare) Gasisolationsstrecke.

In Figur 4 ist ein Ausführungsbeispiel eines Stromrichters 400 dargestellt. Im Ausführungsbeispiel handelt es sich dabei um einen modularen Multilevelstromrichter 400. Dieser Multilevelstromrichter 400 kann an die Anschlüsse A₁ bis A₃ der Anordnung gemäß den Figuren 1 bis 3 angeschlossen werden.

Der Multilevelstromrichter 400 weist einen ersten Wechselspannungsanschluss 405, einen zweiten Wechselspannungsanschluss 407 und einen dritten Wechselspannungsanschluss 409 auf. Der erste Wechselspannungsanschluss 405 ist elektrisch mit einem ersten Phasenmodulzweig 411 und einem zweiten Phasenmodulzweig 413 verbunden. Der erste Phasenmodulzweig 411 und der zweite Phasenmodulzweig 413 bilden ein erstes Phasenmodul 415 des Stromrichters 400. Das dem ersten Wechselspannungsanschluss 405 abgewandte Ende des ersten Phasenmodulzweigs 411 ist mit einem ersten Gleichspannungsanschluss 416 elektrisch verbunden; das dem ersten Wechselspannungsanschluss 405 abgewandte Ende des zweiten Phasenmodulzweigs 413 ist mit einem zweiten Gleichspannungsanschluss 417 elektrisch verbunden. Der erste Gleichspannungsanschluss 416 ist ein positiver Gleichspannungsanschluss; der zweite Gleichspannungsanschluss 417 ist ein negativer Gleichspannungsanschluss.

Der zweite Wechselspannungsanschluss 407 ist mit einem Ende eines dritten Phasenmodulzweigs 418 und mit einem Ende eines vierten Phasenmodulzweigs 421 elektrisch verbunden. Der dritte Phasenmodulzweig 418 und der vierte Phasenmodulzweig 421 bilden ein zweites Phasenmodul 424. Der dritte Wechselspannungsanschluss 409 ist mit einem Ende eines fünften Phasenmodulzweigs 427 und mit einem Ende eines sechsten Phasenmodulzweigs 429 elektrisch verbunden. Der fünfte Phasenmodulzweig 427 und der sechste Phasenmodulzweig 429 bilden ein drittes Phasenmodul 431.

Das dem zweiten Wechselspannungsanschluss 407 abgewandte Ende des dritten Phasenmodulzweigs 418 und das dem dritten Wechselspannungsanschluss 409 abgewandte Ende des fünften Phasenmodulzweigs 427 sind mit dem ersten Gleichspannungsanschluss 416 elektrisch verbunden. Das dem zweiten Wechselspannungsanschluss 407 abgewandte Ende des vierten Phasenmodulzweigs 421 und das dem dritten Wechselspannungsanschluss 409 abgewandte Ende des sechsten Phasenmodulzweigs 429 sind mit dem zweiten Gleichspannungsanschluss 417 elektrisch verbunden. Der erste Phasenmodulzweig 411, der dritte Phasenmodulzweig 418 und der fünfte Phasenmodulzweig 427 bilden ein positivseitiges Stromrichterteil 432; der zweite Phasenmodulzweig 413, der vierte Phasenmodulzweig 421 und der sechste Phasenmodulzweig 429 bilden ein negativseitiges Stromrichterteil 433.

Jeder Phasenmodulzweig weist eine Mehrzahl von Modulen (1_1, 1_2, 1_3, 1_4 ... 1_n; 2_1 ... 2_n; usw.) auf, welche (mittels ihrer Modulanschlüsse) elektrisch in Reihe geschaltet sind. Solche Module werden auch als Submodule bezeichnet. Im Ausführungsbeispiel der Figur 4 weist jeder Phasenmodulzweig n Module auf. Die Anzahl der mittels ihrer Modulanschlüsse elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 411 weist also 36 Module 1_1, 1_2, 1_3, ... 1_36 auf. Die anderen Phasenmodulzweige 413, 418, 421, 427 und 429 sind gleichartig aufgebaut.

Im linken Bereich der Figur 4 ist schematisch eine Steuereinrichtung 435 für die Module 1_1 bis 6_n dargestellt. Von dieser zentralen Steuereinrichtung 435 werden optische Nachrichten bzw. optische Signale über eine optische Kommunikationsverbindung 437 (zum Beispiel über einen Lichtwellenleiter) zu den einzelnen Modulen übertragen. Die Nachrichtenübertragung zwischen der Steuereinrichtung und einem Modul ist jeweils symbolhaft durch eine Linie 437 dargestellt; die Richtung der Nachrichtenübertragung ist durch die Pfeilspitzen an den Linien 437 symbolisiert. Dies ist am Beispiel der Module 1_1, 1_4 und 4_5 dargestellt; zu den anderen Modulen werden auf die gleiche Art und Weise Nachrichten gesendet beziehungsweise von diesen Modulen Nachrichten empfangen. Beispielsweise sendet die Steuereinrichtung 435 an die einzelnen Module jeweils einen Sollwert für den Schaltzustand der elektronischen Schaltelemente.

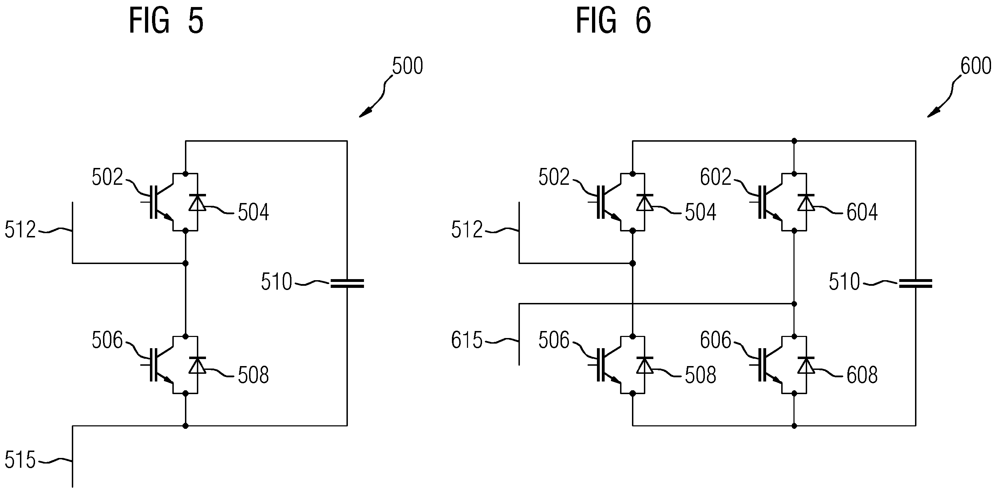

In Figur 5 ist ein Ausführungsbeispiel eines Moduls 500 des Multilevelstromrichters 400 dargestellt. Bei dem Modul kann es sich beispielsweise um eines der in Figur 4 dargestellten Module 1_1 ... 6_n handeln.

Das Modul 500 ist als ein Halbbrücken-Modul 500 ausgestaltet. Das Modul 500 weist ein erstes (abschaltbares) elektronisches Schaltelement 502 (erstes abschaltbares Halbleiterventil 502) mit einer ersten antiparallel geschalteten Diode 504 auf. Weiterhin weist das Modul 500 ein zweites (abschaltbares) elektronisches Schaltelement 506 (zweites abschaltbares Halbleiterventil 506) mit einer zweiten antiparallel geschalteten Diode 508 sowie einen elektrischen Energiespeicher 510 in Form eines Kondensators 510 auf. Das erste elektronische Schaltelement 502 und das zweite elektronische Schaltelement 506 sind beispielhaft jeweils als ein IGBT (insulated-gate bipolar transistor) ausgestaltet. Das erste elektronische Schaltelement 502 ist elektrisch in Reihe geschaltet mit dem zweiten elektronischen Schaltelement 506. Am Verbindungspunkt zwischen den beiden elektronischen Schaltelementen 502 und 506 ist ein erster galvanischer Modulanschluss 512 angeordnet. An dem Anschluss des zweiten elektronischen Schaltelements 506, welcher dem Verbindungspunkt gegenüberliegt, ist ein zweiter galvanischer Modulanschluss 515 angeordnet. Der zweite Modulanschluss 515 ist weiterhin mit einem ersten Anschluss des Energiespeichers 510 elektrisch verbunden; ein zweiter Anschluss des Energiespeichers 510 ist elektrisch verbunden mit dem Anschluss des ersten elektronischen Schaltelements 502, der dem Verbindungspunkt gegenüberliegt.

Der Energiespeicher 510 ist also elektrisch parallel geschaltet zu der Reihenschaltung aus dem ersten elektronischen Schaltelement 502 und dem zweiten elektronischen Schaltelement 506. Durch entsprechende Ansteuerung des ersten elektronischen Schaltelements 502 und des zweiten elektronischen Schaltelements 506 durch eine Steuereinrichtung des Stromrichters kann erreicht werden, dass zwischen dem ersten Modulanschluss 512 und dem zweiten Modulanschluss 515 entweder die Spannung des Energiespeichers 510 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

In Figur 6 ist ein weiteres Ausführungsbeispiel eines Moduls 600 des Multilevelstromrichters 400 dargestellt. Bei dem Modul 600 kann es sich beispielsweise um eines der in Figur 4 dargestellten Module 1_1 ... 6_n handeln.

Neben den bereits aus Figur 5 bekannten ersten elektronischen Schaltelement 502, zweiten elektronischen Schaltelement 506, erster Freilaufdiode 504, zweiter Freilaufdiode 508 und Energiespeicher 510 weist das in Figur 6 dargestellte Modul 600 ein drittes elektronisches Schaltelement 602 mit einer antiparallel geschalteten dritten Freilaufiode 604 sowie ein viertes elektronisches Schaltelement 606 mit einer vierten antiparallel geschalteten Freilaufdiode 608 auf. Das dritte elektronische Schaltelement 602 und das vierte elektronische Schaltelement 606 sind beispielhaft jeweils als ein IGBT ausgestaltet. Im Unterschied zur Schaltung der Figur 5 ist der zweite Modulanschluss 615 nicht mit dem zweiten elektronischen Schaltelement 506 elektrisch verbunden, sondern mit einem Mittelpunkt (Verbindungspunkt) einer elektrischen Reihenschaltung aus dem dritten elektronischen Schaltelement 602 und dem vierten elektronischen Schaltelement 606.

Das Modul 600 der Figur 6 ist ein sogenanntes Vollbrücken-Modul 600. Dieses Vollbrücken-Modul 600 zeichnet sich dadurch aus, dass bei entsprechender Ansteuerung der vier elektronischen Schaltelemente zwischen dem ersten (galvanischen) Modulanschluss 512 und dem zweiten (galvanischen) Modulanschluss 615 wahlweise entweder die positive Spannung des Energiespeichers 510, die negative Spannung des Energiespeichers 510 oder eine Spannung des Wertes Null (Nullspannung) ausgegeben werden kann. Somit kann also mittels des Vollbrückenmoduls 600 die Polarität der Ausgangsspannung umgekehrt werden. Der Multilevelstromrichter 400 kann entweder nur Halbbrücken-Module 500, nur Vollbrücken-Module 600 oder auch Halbbrücken-Module 500 und Vollbrücken-Module 600 aufweisen.

Wie oben bereits erläutert, besteht insbesondere bei Auftreten eines einpoligen Erdschlusses zwischen dem Transformator 5 und dem Multilevelstromrichter 400 die Gefahr, dass die an den Wechselspannungsanschlüssen 405, 407 und 409 auftretende Wechselspannung sehr hohe Werte annimmt. Dadurch können die Module überlastet werden, das heißt, die Energiespeicher 510 der Module können auf eine unzulässig hohe Spannung aufgeladen werden. Mittels des Schalters 11 (welcher im Fehlerfall die Überspannungsbegrenzungseinrichtung 8 teilweise oder vollständig überbrückt) wird eine derartige unerwünschte Aufladung der Module des Multilevelstromrichters 400 vermieden oder zumindest verringert. Dadurch wird ein zuverlässiger Schutz vor Überspannung erreicht. Dadurch ist eine überspannungsbedingte Überdimensionierung der Anzahl der Module in dem Multilevelstromrichter nicht mehr notwendig, was zu einer deutlichen Kosteneinsparung führt.

Es wurde eine Anordnung und ein Verfahren beschrieben, mit denen bei Auftreten eines Fehlers eine Überspannung, die an den in Sternschaltung geschalteten Sekundärwicklungen des Transformators auftreten kann, begrenzt oder vollständig vermieden werden kann. Dadurch wird eine an den Transformator angeschlossene Einrichtung, beispielsweise ein an den Transformator angeschlossener Multilevelstromrichter, wirkungsvoll vor Überspannung geschützt.

Insbesondere um bei einem stromrichterseitigen einpoligen Erdfehler eine asymmetrische Spannungsanhebung in der Dreiphasenwechselspannung (und damit eine unerwünschte Aufladung der Module des Multilevelstromrichters auf zu hohe Spannungen) zu vermeiden, wird der Schalter eingesetzt. Durch Schließen des Schalters wird nach Erkennen eines derartigen Fehlers eine fehlerbedingte Verlagerung der Sternpunktspannung bezüglich Erdpotential zeitlich verkürzt. Dabei ist es vorteilhaft, wenn die gesamte Reaktions- und Schaltzeit der Auslösevorrichtung 59 und des Schalters kleiner als 10 Millisekunden ist.

Der Einsatz des Schalters ist insbesondere bei Transformatoren vorteilhaft, welche eine Sekundärspannung größer oder gleich 36 kV aufweisen.

Der Schalter 11 bzw. 305 wird also zur (zeitweiligen, vorübergehenden) Sternpunkterdung verwendet. Der Schalter ermöglicht eine vollständige Sternpunkterdung (wie in Figur 1 dargestellt) oder eine teilweise Sternpunkterdung (wie in Figur 2 dargestellt). Durch diese Sternpunkterdung wird eine asymmetrische Potentialanhebung bei asymmetrischen Fehlern verringert bzw. zeitlich verkürzt. Bei Schaltzeiten < 10 Millisekunden können die Module des Multilevelstromrichters besonders effektiv geschützt werden. Außerdem ist es vorteilhaft, wenn bei dem Schalter 11 kein Kontaktprellen (oder nur ein geringes Kontaktprellen) auftritt, um eine starke Belastung des Schalters 11 zu vermeiden. Dies ist zum Beispiel beim Einsatz von Vakuumschaltröhren als Isolations- bzw. Schalteinrichtung vorteilhaft.

Bei dem Transformator 5 kann es sich grundsätzlich um einen beliebigen Transformator handeln. So kann der Transformator 5 beispielsweise für jede Phase einen eigenen Kern (Einphasenkern) aufweisen, oder auch einen allen drei Phasen zugeordneten Kern (Dreiphasenkern). Die netzseitigen Wicklungen (Primärwicklungen 14) können jede beliebige Schaltgruppe (zum Beispiel Sternschaltung oder Dreieckschaltung) aufweisen.

Diese Primärwicklungen 14 brauchen also nicht wie im Ausführungsbeispiel in Sternschaltung angeordnet zu sein. Auch kann der Transformator weitere Wicklungssysteme aufweisen; diese beeinträchtigen nicht die Wirkung des sternpunktseitigen Kurzschließers 11 an den Sekundärwicklungen 20.

## Patentansprüche

1. Anordnung mit einem mehrphasigen Transformator (5), der Primärwicklungen (14) und Sekundärwicklungen (20) aufweist, wobei
- die Sekundärwicklungen (20) in einer Sternschaltung geschaltet sind, deren Sternpunkt (23) mittels einer Überspannungsbegrenzungseinrichtung (8) mit Erdpotential (17) verbunden ist,
- die Überspannungsbegrenzungseinrichtung (8) ein erstes überspannungsbegrenzendes Bauelement (26) aufweist,
- dem ersten überspannungsbegrenzenden Bauelement (26) ein Schalter (11) zugeordnet ist, der in seinem geschlossenen Zustand das erste überspannungsbegrenzende Bauelement (26) elektrisch überbrückt, und
- die Überspannungsbegrenzungseinrichtung (8) ein zweites überspannungsbegrenzendes Bauelement (205) aufweist, das elektrisch in Reihe zu dem ersten überspannungsbegrenzenden Bauelement (26) geschaltet ist.

2. Anordnung nach Anspruch 1,
**dadurch gekenzeichnet**, dass
- der Schalter (11) parallel zu dem ersten überspannungsbegrenzenden Bauelement (26) geschaltet ist.

3. Anordnung nach Anspruch 1 oder 2,
**dadurch gekennzeichnet, dass**
- das zweite überspannungsbegrenzende Bauelement (205) schalterfrei ist.

4. Anordnung nach einem der vorhergehenden Ansprüche,
**dadurch gekennzeichnet, dass**
- das erste überspannungsbegrenzende Bauelement (26) und/oder das zweite überspannungsbegrenzende Bauelement (205) ein Überspannungsableiter ist.

5. Anordnung nach einem der vorhergehenden Ansprüche,
**dadurch gekennzeichnet, dass**
- der Schalter (11) ein mechanischer Schalter ist, der insbesondere eine Vakuumschaltröhre aufweist.

6. Anordnung nach einem der vorhergehenden Ansprüche,
**dadurch gekennzeichnet, dass**
- der Schalter ein leistungselektronischer Schalter (305), insbesondere ein leistungselektronischer Schalter (305) mit antiparallel geschalteten Thyristoren, ist.

7. Anordnung nach einem der vorhergehenden Ansprüche,
**dadurch gekennzeichnet, dass**
- der Schalter (11) eine Gasstrecke aufweist.

8. Anordnung nach einem der vorhergehenden Ansprüche,
**dadurch gekennzeichnet, dass**
- der Schalter (11) mit einer Auslösevorrichtung (59) verbunden ist, wobei die Auslösevorrichtung (59) derart ausgestaltet ist, dass sie bei Auftreten eines Fehlers (45) auf der Sekundärseite des Transformators (5), insbesondere bei Auftreten eines Fehlers bei einem an die Sekundärseite des Transformators (5) angeschlossenen Stromrichter (400), den Schalter (11) schließt.

9. Anordnung nach einem der vorhergehenden Ansprüche,
**dadurch gekennzeichnet, dass**
- der Transformator (5) für eine Sekundärspannung >= 36 kV ausgestaltet ist.

10. Verfahren zum Schützen einer elektrischen Anlage (1, 400) vor Überspannung, wobei
- die elektrische Anlage einen mehrphasigen Transformator (5) mit Primärwicklungen (14) und Sekundärwicklungen (20) aufweist,
- die Sekundärwicklungen (20) in einer Sternschaltung geschaltet sind, deren Sternpunkt (23) mittels einer Überspannungsbegrenzungseinrichtung (8) mit Erdpotential (17) verbunden ist,
- die Überspannungsbegrenzungseinrichtung (8) ein erstes überspannungsbegrenzendes Bauelement (26) aufweist,
- dem ersten überspannungsbegrenzenden Bauelement (26) ein Schalter (11) zugeordnet ist, der in seinem geschlossenen Zustand das erste überspannungsbegrenzende Bauelement (26) elektrisch überbrückt, und
- die Überspannungsbegrenzungseinrichtung (8) ein zweites überspannungsbegrenzendes Bauelement (205) aufweist, das elektrisch in Reihe zu dem ersten überspannungsbegrenzenden Bauelement (26) geschaltet ist,
wobei bei dem Verfahren
- bei Auftreten eines Fehlers (45) auf der Sekundärseite des Transformators (5), insbesondere bei Auftreten eines Fehlers bei einem an die Sekundärseite des Transformators angeschlossenen Stromrichter (400), der Schalter (11) geschlossen wird.

11. Verfahren nach Anspruch 10,
**dadurch gekennzeichnet, dass**
- der Fehler ein Erdschluss (45) an einer Phasenleitung (L₁) ist, die mit einer der Sekundärwicklungen (20_1) des Transformators (5) verbunden ist.

## Claims

1. Arrangement having a polyphase transformer (5), which has primary windings (14) and secondary windings (20), wherein
- the secondary windings (20) are connected in a star circuit, the star point (23) of which is connected to earth potential (17) by means of an overvoltage limitation device (8),
- the overvoltage limitation device (8) has a first overvoltage-limiting component (26),
- a switch (11), which in its closed state electrically bypasses the first overvoltage-limiting component (26), is assigned to the first overvoltage-limiting component (26), and
- the overvoltage limitation device (8) has a second overvoltage-limiting component (205), which is electrically connected in series with the first overvoltage-limiting component (26).

2. Arrangement according to Claim 1,
**characterized in that**
- the switch (11) is connected in parallel with the first overvoltage-limiting component (26).

3. Arrangement according to Claim 1 or 2,
**characterized in that**
- the second overvoltage-limiting component (205) is switchless.

4. Arrangement according to any one of the preceding claims,
**characterized in that**
- the first overvoltage-limiting component (26) and/or the second overvoltage-limiting component (205) is a surge arrester.

5. Arrangement according to any one of the preceding claims,
**characterized in that**
- the switch (11) is a mechanical switch, which has, in particular, a vacuum interrupter.

6. Arrangement according to any one of the preceding claims,
**characterized in that**
- the switch is a power electronics switch (305), in particular a power electronics switch (305) having thyristors that are connected in antiparallel.

7. Arrangement according to any one of the preceding claims,
**characterized in that**
- the switch (11) has a gas section.

8. Arrangement according to any one of the preceding claims,
**characterized in that**
- the switch (11) is connected to a tripping apparatus (59), wherein the tripping apparatus (59) is configured in such a way that it closes the switch (11) when a fault (45) occurs on the secondary side of the transformer (5), in particular when a fault occurs in a power converter (400) that is connected to the secondary side of the transformer (5).

9. Arrangement according to any one of the preceding claims,
**characterized in that**
- the transformer (5) is configured for a secondary voltage ≥ 36 kV.

10. Method for protecting an electrical system (1, 400) from overvoltage, wherein
- the electrical system has a polyphase transformer (5) having primary windings (14) and secondary windings (20),
- the secondary windings (20) are connected in a star circuit, the star point (23) of which is connected to earth potential (17) by means of an overvoltage limitation device (8),
- the overvoltage limitation device (8) has a first overvoltage-limiting component (26),
- a switch (11), which in its closed state electrically bypasses the first overvoltage-limiting component (26), is assigned to the first overvoltage-limiting component (26), and
- the overvoltage limitation device (8) has a second overvoltage-limiting component (205), which is electrically connected in series with the first overvoltage-limiting component (26),
wherein, in the method,
- the switch (11) is closed when a fault (45) occurs on the secondary side of the transformer (5), in particular when a fault occurs in a power converter (400) that is connected to the secondary side of the transformer.

11. Method according to Claim 10,
**characterized in that**
- the fault is an earth fault (45) on a phase line (L₁) that is connected to one of the secondary windings (20_1) of the transformer (5).

## Revendications

1. Agencement comprenant un transformateur (5) polyphasé, qui a des enroulements (14) primaires et des enroulements (20) secondaires, dans lequel
- les enroulements (20) secondaires sont montés suivant un montage en étoile, dont le point (23) neutre est connecté au potentiel (17) de terre au moyen d'un dispositif (8) de limitation de la surtension,
- le dispositif (8) de limitation de la surtension a un premier composant (26) limitant la surtension,
- au premier composant (26) limitant la surtension est affecté un interrupteur (11) qui, dans son état fermé, shunte électriquement le premier composant (26) limitant la surtension, et
- le dispositif (8) de limitation de la surtension a un deuxième composant (205) limitant la surtension, qui est monté électriquement en série avec le premier composant (26) limitant la surtension.

2. Agencement suivant la revendication 1,
**caractérisé en ce que**
- l'interrupteur (11) est monté en parallèle avec le premier composant (26) limitant la surtension.

3. Agencement suivant la revendication 1 ou 2,
**caractérisé en ce que**
- le deuxième composant (205) limitant la surtension est sans interrupteur.

4. Agencement suivant l'une des revendications précédentes,
**caractérisé en ce que**
- le premier composant (26) limitant la surtension et/ou le deuxième composant (205) limitant la surtension est un parafoudre.

5. Agencement suivant l'une des revendications précédentes,
**caractérisé en ce que**
- l'interrupteur (11) est un interrupteur mécanique, qui a en particulier un tube de commutation à vide.

6. Agencement suivant l'une des revendications précédentes,
**caractérisé en ce que**
- l'interrupteur est un interrupteur (305) électronique de puissance, en particulier un interrupteur (305) électronique de puissance ayant des thyristors montés tête bêche.

7. Agencement suivant l'une des revendications précédentes,
**caractérisé en ce que**
- l'interrupteur (11) a une section de gaz.

8. Agencement suivant l'une des revendications précédentes,
**caractérisé en ce que**
- l'interrupteur (11) est connecté à un dispositif (59) de déclenchement, dans lequel le dispositif (59) de déclenchement est conformé de manière, s'il se produit un défaut (45) du côté secondaire du transformateur (5), en particulier s'il se produit un défaut dans un convertisseur (400) raccordé au côté secondaire du transformateur (5), à fermer l'interrupteur (11).

9. Agencement suivant l'une des revendications précédentes,
**caractérisé en ce que**
- le transformateur (5) est conformé pour une tension secondaire supérieure >= 36 kV.

10. Procédé de protection d'une installation (1, 400) électrique vis-à-vis de la surtension, dans lequel
- l'installation électrique a un transformateur (5) polyphasé ayant des enroulements (14) primaires et des enroulements (20) secondaires,
- les enroulements (20) secondaires sont montés suivant un montage en étoile, dont le point (23) neutre est connecté au potentiel (17) de terre au moyen d'un dispositif (8) de limitation de la surtension,
- le dispositif (8) de limitation de la surtension a un premier composant (26) limitant la surtension,
- au premier composant (26) limitant la surtension est affecté un interrupteur (11), qui, dans son état fermé, shunte électriquement le premier composant (26) limitant la surtension, et
- le dispositif (8) de limitation de la surtension a un deuxième composant (205) limitant la surtension, qui est monté électriquement en série avec le premier composant (26) limitant la surtension,
dans lequel, dans le procédé
- à l'apparition d'un défaut (45) du côté secondaire du transformateur (5), en particulier l'apparition d'un défaut dans un convertisseur (400) raccordé au côté secondaire du transformateur, on ferme l'interrupteur (11).

11. Procédé suivant la revendication 10,
**caractérisé en ce que**
- le défaut est une fuite à la terre (45) d'une ligne (L₁) de phase, qui est connectée à l'un des enroulements (20_1) secondaire du transformateur (5).
